# EUROPÄISCHE PATENTSCHRIFT

(11) **EP 2 918 425 B1**
(45) Veröffentlichungstag und Bekanntmachung des Hinweises auf die Patenterteilung: **14.03.2018**
(21) Anmeldenummer: 15150553.4
(22) Anmeldetag: 09.01.2015
(51) Int. Cl.: B60C 9/04, B60C 9/02, B60C 9/09, B60C 9/06, B60C 15/00

(54) **Fahrzeugluftreifen**
Pneumatic tyre for a vehicle
Pneumatique de véhicule

(30) Priorität: 14.03.2014 DE 102014204754
(43) Veröffentlichungstag der Anmeldung: 16.09.2015
(73) Patentinhaber: Continental Reifen Deutschland GmbH, 30165 Hannover (DE)
(72) Erfinder: Gosemann, Gordon, 31061 Alfeld (DE)
(74) Vertreter: Finger, Karsten

(56) Entgegenhaltungen:
- EP-A1- 1 535 761
- EP-A2- 0 953 462
- US-A- 4 706 725
- US-A- 4 854 362

## Beschreibung

Die Erfindung betrifft einen Fahrzeugluftreifen in Radialbauart mit einem Gürtelverband aus mehreren Gürtellagen, einem profilierten Laufstreifen, Wulstbereichen mit Wulstkernen und Kernprofilen und mit einer mehrlagigen Karkasseinlage, welche eine erste Karkasslage mit in radialer Richtung verlaufenden textilen Festigkeitsträgern aufweist, wobei die Karkasslage von Wulstbereich zu Wulstbereich und um die Wulstkerne von innen nach außen verläuft und radial außerhalb der Wulstbereiche als Karkasshochschläge endet, wobei in jeder Reifenhälfte eine zweite, die erste Karkasslage in den Wulstbereichen außen umlaufende Karkasslage angeordnet ist, welche beidseitig der ersten Karkasslage über den gesamten Bereich der Seitenwände und bis unter den Gürtelrandbereich verläuft, derart zwei Verstärkungslagen bildet und deren Festigkeitsträger unter einem Winkel von 30 ° bis 60 ° zur radialen Richtung verlaufen, wobei die radial außerhalb der ersten Karkasslage verlaufende Verstärkungslage jeder zweiten Karkasslage bis unter den Gürtelrandbereich reicht.

Ein derartiger Fahrzeugluftreifen, welcher ein Zweiradreifen ist, ist aus der US 4 706 725 A bekannt. Der Reifen kann mehrere Karkasslagen aufweisen, welche sich durchgehend zwischen den Wulstbereichen erstrecken, ihre Hochschläge enden in unterschiedlichen Höhen. Der Reifen soll ein hohe Stabilität bei Kurvenfahrt besitzen ist daher in den Seitenwänden zusätzlich mit sich weit in radialer Richtung erstreckenden Kernprofilen verstärkt.

Es ist ferner auch bekannt, die Karkasseinlage gemäß einer sogenannten C-Lagenkonstruktion im Reifen anzuordnen, bei der die um die Wulstkerne von innen nach außen umlaufenden Abschnitte der Karkasseinlage bis unter den Gürtelverband rückgeführt sind. Aus der EP 0 483 710 A1 ist weiter ein Fahrzeugluftreifen in Radialbauart bekannt, welcher eine zusätzliche Verstärkungslage aufweist, die in den Seitenwandbereichen entlang der Außenseite der Karkasslage verläuft und in den Wulstbereichen lediglich um den Wulstkern herum verläuft. Diese zusätzliche Verstärkungslage enthält Verstärkungskorde aus einem textilen Material, vorzugsweise aus Nylon, welche unter einem Winkel von 30 ° bis 60 °, insbesondere etwa 45 °, zur radialen Richtung verlaufen. Die zusätzlichen Verstärkungslagen sollen die Seitenwandbereiche des Reifens in Umfangsrichtung versteifen, insbesondere um die Torsionsfestigkeit des Reifens im Bereich der Seitenwände beim plötzlichen Beschleunigen oder Bremsen zu verbessern.

Die EP1535761A1 offenbart einen Reifen mit einer Verstärkungslage mit unter einem Winkel von 30°-60° zur radialen Richtung verlaufenden Korden, die im Wulstbereich zwischen Radialkarkasse und Wulstkern um den Wulstkern umläuft.

Der Erfindung liegt die Aufgabe zugrunde, diese bekannte Lösung zu verbessern, insbesondere eine konstruktiv einfache und kostengünstigere Lösung zur optimalen Übertragung von in Umfangsrichtung wirkenden Schubkräften auf die Seitenwände zur Verfügung zu stellen.
Gelöst wird die gestellte Aufgabe erfindungsgemäß dadurch, dass die radial innerhalb der ersten Karkasslage verlaufende Verstärkungslage jeder zweiten Karkasslage ebenfalls bis unter den Gürtelrandbereich reicht und radial innerhalb des Gürtelverbandes endet.
Die zweite Karkasslage bildet daher zwei Verstärkungslagen mit einander kreuzenden Festigkeitsträgern. Dadurch werden die Seitenwände optimal verstärkt und sind in der Lage, in Umfangsrichtung auf den Reifen wirkende Kräfte sehr gut aufzunehmen. Die zweite Karkasslage ist kostengünstig herstellbar und auf einfache Weise gemeinsam mit den ersten Karkasslage beim Reifenaufbau einbaubar.
Bei einer bevorzugten Ausführungsform der Erfindung beträgt der Winkel der Festigkeitsträger in der zweiten Karkasslage etwa 45 °. Eine Winkelung der Festigkeitsträger in dieser Größenordnung stellt ein Optimum hinsichtlich Schubkraftübertragung dar.

Besonders vorteilhaft ist es, wenn die erste und die zweite Karkasslage, bis auf die unterschiedliche Winkelung ihrer Festigkeitsträger, gleich aufgebaut sind, Diese Maßnahme reduziert Kosten und vereinfacht die Reifenfertigung.

Bei erfindungsgemäß ausgeführten Fahrzeugluftreifen können die Hochschläge der ersten Karkasslage relativ niedrig ausgeführt werden, da die Umfangskräfte von der zweiten Karkasslage aufgenommen werden. Es ist daher ausreichend, wenn die Hochschläge der ersten Karkasslage bis in eine in radialer Richtung vom Felgeneckpunkt des Wulstbereiches gemessene Höhe reichen, die 10 % bis 20 % der Querschnittshöhe des Reifens beträgt.

Die bis unter die Gürtelrandbereiche reichenden Enden der beiden von der zweiten Karkasslage gebildeten Verstärkungslagen sollten in diesen Bereichen gut verankert sein. In diesem Zusammenhang ist es daher vorteilhaft, wenn sich das Ende der radial innerhalb der ersten Karkasslage und des Gürtelverbandes endenden Verstärkungslage der zweiten Karkasslage in einem Abstand von 7% bis 15% der Gürtelbreite vom äußeren Rand des Gürtelverbandes befindet. Das radial außerhalb der ersten Karkasslage und radial innerhalb des Gürtelverbandes befindliche Ende der Verstärkungslage der zweiten Karkasslage sollte sich in einem Abstand vom äußeren Rand des Gürtelverbandes befinden, welcher größer ist als der Abstand des anderen Endes der anderen Verstärkungslage der zweiten Karkasslage vom äußeren Rand des Gürtelverbandes und 10% bis 20% der Gürtelbreite betragen.

Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1 einen Querschnitt durch einen Fahrzeugluftreifen und
Fig. 2 eine Ansicht des Verlaufs der Festigkeitsträger in den Karkasslagen im Bereich der Seitenwände des Fahrzeugluftreifens.

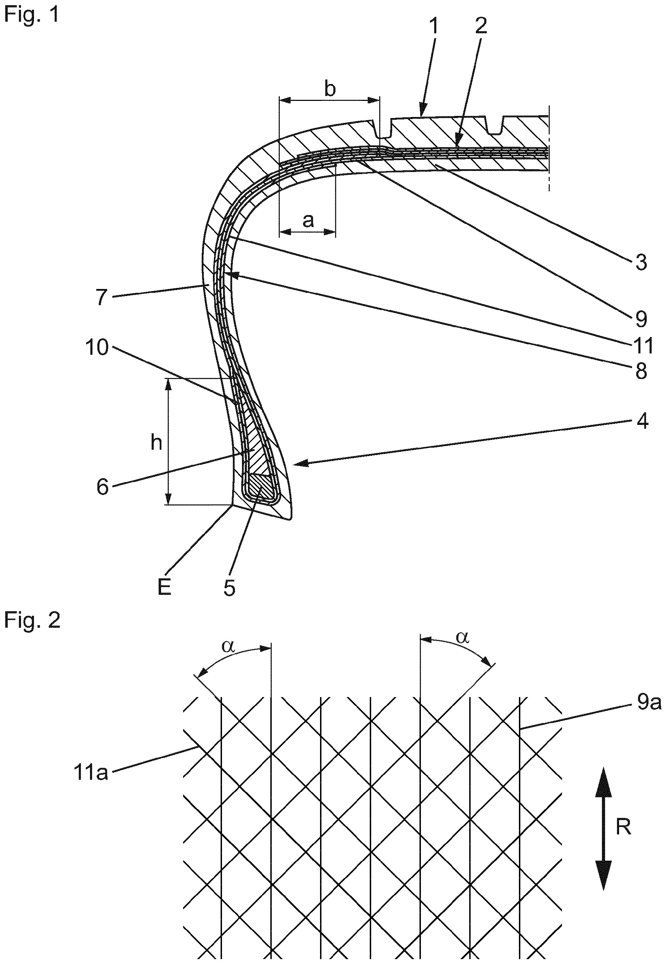

Erfindungsgemäß ausgeführte Fahrzeugluftreifen sind vorzugsweise Reifen für Personenkraftwagen oder Vans und insbesondere solche, die als Niederquerschnittsreifen und für einen Einsatz unter hohen Geschwindigkeiten geeignet und ausgeführt sind. Fig. 1 zeigt einen Querschnitt durch einen Fahrzeugluftreifen mit seinen wesentlichen Bestandteilen, nämlich einem profilierten Laufstreifen 1, einem Gürtelverband 2 aus mehreren Gürtellagen und gegebenenfalls einer Gürtelbandage, einer Innenschicht 3, Wulstbereichen 4 mit Wulstkernen 5 und Kernprofilen 6, Seitenwänden 7 und einer mehrlagigen Karkasseinlage 8. Der Gürtelverband 2 kann in an sich bekannter Weise zwei oder mehrere Gürtellagen mit in jeder Gürtellage parallel zueinander und unter einem spitzen Winkel zur Umfangsrichtung des Reifens verlaufenden Festigkeitsträgern, insbesondere Stahlkorden, aufweisen, wobei die Festigkeitsträger der Gürtellagen einander kreuzen. Die gegebenenfalls vorgesehene Gürtelbandage kann ein- oder mehrlagig ausgeführt sein und mit zumindest im Wesentlichen in Umfangsrichtung verlaufenden Festigkeitsträgern aus einem textilen Material, insbesondere Nylon, versehen sein. Der profilierte Laufstreifen 1 umfasst nicht dargestellte Profilpositive, wie Profilblöcke und dergleichen, sowie Profilnegative, wie diverse Rillen, etwa Umfangs-, Querrillen und dergleichen.

Die Karkasseinlage 8 umfasst eine Karkasslage 9 mit textilen Festigkeitsträgern 9a (Fig. 2), insbesondere aus Polyester oder Polyamid, die im Reifen zumindest im Wesentlichen in radialer Richtung, daher im rechten Winkel zur Umfangsrichtung des Reifens, verlaufen. Die Festigkeitsträger 9a sind die Kettfaden eines Karkassgewebes, welches in eine Gummimischung, die Karkassgummierung, eingebettet ist. In Fig. 2 verlaufen die Festigkeitsträger 9a parallel zu der durch den Pfeil R gekennzeichneten radialen Richtung des Reifens. Die Karkasslage 9 verläuft radial innerhalb des Gürtelverbands 2 von Wulstbereich 4 zu Wulstbereich 4, umschlingt jeden Wulstkern 5 von innen nach außen und bildet axial außerhalb der Wulstkerne 5 und Kernprofile 6 die sogenannten Karkasshochschläge 10, die radial außerhalb der Kernprofile 6 bei oder im Bereich der Seitenwände 7 enden. Bezogen auf den Felgeneckpunkt E reichen die Karkasshochschläge 10 in eine in radialer Richtung gemessene Höhe h, welche 10 % bis 20 % der Querschnittshöhe des Reifens beträgt.

Entlang beider Seiten der Karkasslage 9 und in Kontakt zu dieser verläuft in jeder Reifenhälfte eine weitere Karkasslage 11. Jede Karkasslage 11 verläuft radial innerhalb des Gürtelverbandes 2 und radial innerhalb der Karkasslage 9 beginnend, entlang der Innenseite der Karkasslage 9, um den Wulstkern 5, anschließend entlang des Hochschlages 10 und der Außenseite der Karkasslage 9 bis in einen Bereich radial innerhalb des Gürtelverbandes 2. Das radial außerhalb der Karkasslage 9 befindliche Ende jeder Karkasslage 11 endet in einem axialen Abstand b vom äußeren Rand des Gürtelverbandes 2, welcher 10% bis 20% der Breite B_{G} des Gürtelverbandes 2 beträgt und größer ist als der axiale Abstand a des radial innerhalb der Karkasslage 9 befindlichen Endes der Karkasslage 11 vom äußeren Rand des Gürtelverbandes 2, wobei a zwischen 7% und 15% der Breite B_{G} beträgt. Die Abstände a und b sollten mindestens 10 mm betragen. Jede Karkasslage 11 besteht ebenfalls aus einem in eine Karkassgummierung eingebetteten Gewebe mit Festigkeitsträgern 11a aus einem textilen Material, insbesondere Polyester oder Polyamid. Die Festigkeitsträger 11a in der im Reifen eingebauten Karkasslage 11 verlaufen unter einem Winkel α von 30 ° bis zu 60 °, vorzugsweise 45 °, zur Umfangsrichtung. Nachdem die Karkasslage 11 zwei Verstärkungslagen im Reifen bildet, verlaufen die Festigkeitsträger der Verstärkungslage an der Innenseite der Karkasslage 9 gekreuzt zu den Festigkeitsträgern in der Verstärkungslage an der Außenseite der Karkasslage 9, unter gleich großen Winkeln α zur radialen Richtung, wie Fig. 2 zeigt.

Die Karkasslage 9 ist eine der üblichen 0°-Lagen mit niedrigem Lagenumschlag und erfüllt vor allem die Grundaufgaben einer Karkasseinlage, nämlich das Sicherstellen von Druckstabilität. Die von der Karkasslage 11 gebildeten Verstärkungslagen übertragen vor allem in Umfangsrichtung wirkende Schubkräfte in die Seitenwände 7. Im Rahmen der Erfindung werden daher die wesentlichen Aufgaben einer Karkasseinlage eines Fahrzeugluftreifens auf drei Verstärkungslagen verteilt, die kostengünstig herstellbar sind und beim Aufbau des Reifens ohne besonderen Mehraufwand einbaubar sind.

### Bezugsziffernliste

1 ............................Laufstreifen
2 ............................Gürtelverband
3 ............................Innenschicht
4 ............................ Wulstbereich
5 ............................ Wulstkern
6 ............................ Kernprofil
7 ............................ Seitenwand
8 ............................ Karkasseinlage
9 ............................ Karkasslage
9a ..........................Festigkeitsträger
10 .......................... Karkasshochschlag
11 .......................... Karkasslage
11a ........................Festigkeitsträger
a, b ........................Abstand
B_{G} .........................Gürtelbreite
E............................Felgeneckpunkt
h ............................Höhe
R ........................... radiale Richtung
α ........................... Winkel

## Patentansprüche

1. Fahrzeugluftreifen in Radialbauart mit einem Gürtelverband (2) aus mehreren Gürtellagen, einem profilierten Laufstreifen (1), Wulstbereichen (4) mit Wulstkernen (5) und Kernprofilen (6) und mit einer mehrlagigen Karkasseinlage (8), welche eine erste Karkasslage (9) mit in radialer Richtung (R) verlaufenden textilen Festigkeitsträgern (9a) aufweist, wobei die Karkasslage (9) von Wulstbereich (4) zu Wulstbereich (4) und um die Wulstkerne (5) von innen nach außen verläuft und radial außerhalb der Wulstbereiche (4) als Karkasshochschläge (10) endet, wobei in jeder Reifenhälfte eine zweite, die erste Karkasslage (9) in den Wulstbereichen (4) außen umlaufende Karkasslage (11) angeordnet ist, welche beidseitig der ersten Karkasslage (9) über den gesamten Bereich der Seitenwände (7) verläuft, derart zwei Verstärkungslagen bildet und deren Festigkeitsträger (11a) unter einem Winkel (α) von 30 ° bis 60 ° zur radialen Richtung (R) verlaufen, wobei die radial außerhalb der ersten Karkasslage (9) verlaufende Verstärkungslage der zweiten Karkasslage (11) bis unter den Gürtelrandbereich reicht und radial innerhalb des Gürtelverbandes endet,
**dadurch gekennzeichnet,**
**dass** die radial innerhalb der ersten Karkasslage (9) verlaufende Verstärkungslage der zweiten Karkasslage (11) ebenfalls bis unter den Gürtelrandbereich reicht und radial innerhalb des Gürtelverbandes endet.

2. Fahrzeugluftreifen nach Anspruch 1, **dadurch gekennzeichnet, dass** der Winkel (α) der Festigkeitsträger (11a) in der zweiten Karkasslage (11) etwa 45 ° beträgt.

3. Fahrzeugluftreifen nach Anspruch 1 oder 2, **dadurch gekennzeichnet, dass** die erste und die zweite Karkasslage (9, 11), bis auf die unterschiedliche Winkelung ihrer Festigkeitsträger (9a, 11a), gleich aufgebaut sind.

4. Fahrzeugluftreifen nach einem der Ansprüche 1 bis 3, **dadurch gekennzeichnet, dass** die Hochschläge (10) der ersten Karkasslage (9) bis in eine in radialer Richtung vom Felgeneckpunkt (E) des Wulstbereiches (4) gemessene Höhe (h) reichen, die 10 % bis 20 % der Querschnittshöhe des Reifens beträgt.

5. Fahrzeugluftreifen nach einem der Ansprüche 1 bis 3, **dadurch gekennzeichnet, dass** das Ende der radial innerhalb der ersten Karkasslage (9) und des Gürtelverbandes (2) endenden Verstärkungslage der zweiten Karkasslage (11) sich in einem Abstand (a) von 7% bis 15% der Gürtelbreite (B_{G}) vom äußeren Rand des Gürtelverbandes (2) befindet.

6. Fahrzeugluftreifen nach einem der Ansprüche 1 bis 5, **dadurch gekennzeichnet, dass** das Ende der radial außerhalb der ersten Karkasslage (9) und radial innerhalb des Gürtelverbandes (2) endenden Verstärkungslage der zweiten Karkasslage (11) sich in einem Abstand (b) vom äußeren Rand des Gürtelverbandes (2) befindet, welcher größer ist als der Abstand (a) des anderen Endes der Verstärkungslage der zweiten Karkasslage (11) vom äußeren Rand des Gürtelverbandes (2) und 10% bis 20% der Gürtelbreite (B_{G}) beträgt.

## Claims

1. Pneumatic vehicle tyre of a radial type of construction with a breaker belt assembly (2) comprising multiple belt plies, a profiled tread (1), bead regions (4) with bead cores (5) and bead fillers (6) and with a multi-ply carcass insert (8), which has a first carcass ply (9) with textile reinforcing elements (9a) running in the radial direction (R), wherein the carcass ply (9) runs from bead region (4) to bead region (4) and runs around the bead cores (5) from the inside to the outside and ends radially outside the bead regions (4) as carcass turn-ups (10), wherein there is arranged in each half of the tyre a second carcass ply (11), which runs around the outside of the first carcass ply (9) in the bead regions (4) and on both sides of the first carcass ply (9) runs over the entire region of the sidewalls (7), in this way forms two reinforcing plies and the reinforcing elements (11a) of which run at an angle (α) of 30° to 60° in relation to the radial direction (R), wherein the reinforcing ply of the second carcass ply (11) that runs radially outside the first carcass ply (9) extends to under the peripheral region of the belt and ends radially inside the breaker belt assembly,
**characterized**
**in that** the reinforcing ply of the second carcass ply (11) that runs radially inside the first carcass ply (9) likewise extends to under the peripheral region of the belt and ends radially inside the breaker belt assembly.

2. Pneumatic vehicle tyre according to Claim 1,
**characterized in that** the angle (α) of the reinforcing elements (11a) in the second carcass ply (11) is approximately 45°.

3. Pneumatic vehicle tyre according to Claim 1 or 2,
**characterized in that** the first and second carcass plies (9, 11) are constructed in the same way apart from the different angling of their reinforcing elements (9a, 11a).

4. Pneumatic vehicle tyre according to one of Claims 1 to 3, **characterized in that** the turn-ups (10) of the first carcass ply (9) extend to a height (h), measured in the radial direction from the rim transition point (E) of the bead region (4), which is 10% to 20% of the cross-sectional height of the tyre.

5. Pneumatic vehicle tyre according to one of Claims 1 to 3, **characterized in that** the end of the reinforcing ply of the second carcass ply (11) that ends radially inside the first carcass ply (9) and the breaker belt assembly (2) is located at a distance (a) of 7% to 15% of the belt width (B_{G}) from the outer periphery of the breaker belt assembly (2).

6. Pneumatic vehicle tyre according to one of Claims 1 to 5, **characterized in that** the end of the reinforcing ply of the second carcass ply (11) that ends radially outside the first carcass ply (9) and radially inside the breaker belt assembly (2) is located at a distance (b) from the outer periphery of the breaker belt assembly (2) that is greater than the distance (a) of the other end of the reinforcing ply of the second carcass ply (11) from the outer periphery of the breaker belt assembly (2) and is 10% to 20% of the belt width (B_{G}).

## Revendications

1. Pneumatique de véhicule automobile à structure radiale, comprenant un assemblage de ceinture (2) composé de plusieurs nappes de ceinture, une surface de contact (1) profilée, des zones de talon (4) comprenant des tringles de talon (5) et des profilés de tringle (6) et comprenant un insert de carcasse (8) à nappes multiples, lequel possède une première nappe de carcasse (9) comportant des supports de rigidité (9a) textiles qui s'étendent dans la direction radiale (R), la nappe de carcasse (9) s'étendant de l'intérieur vers l'extérieur d'une zone de talon (4) à une zone de talon (4) et autour des tringles de talon (5) et se terminant radialement à l'extérieur des zones de talon (4) sous la forme de cols de carcasse (10), une deuxième nappe de carcasse (11), qui entoure la première nappe de carcasse (9) à l'extérieur dans les zones de talon (4), étant disposée dans chaque moitié de pneu, laquelle s'étend des deux côtés de la première nappe de carcasse (9) sur toute la zone des parois latérales (7), de manière à former deux nappes de renforcement et dont les supports de rigidité (11a) s'étendent selon un angle (α) de 30° à 60° par rapport à la direction radiale (R), la nappe de renforcement de la deuxième nappe de carcasse (11) qui s'étend radialement à l'extérieur de la première nappe de carcasse (9) s'étirant jusqu'au-dessous de la zone de bordure de la ceinture et se terminant radialement à l'intérieur de l'assemblage de ceinture,
caractérisé en ce la nappe de renforcement de la deuxième nappe de carcasse (11) qui s'étend dans le sens radial à l'intérieur de la première nappe de carcasse (9) s'étire elle aussi jusqu'au-dessous de la zone de bordure de la ceinture et se termine dans le sens radial à l'intérieur de l'assemblage de ceinture.

2. Pneumatique de véhicule automobile selon la revendication 1, **caractérisé en ce que** l'angle (α) des supports de rigidité (11a) dans la deuxième nappe de carcasse (11) est égal à environ 45°.

3. Pneumatique de véhicule automobile selon la revendication 1 ou 2, **caractérisé en ce que** la première et la deuxième nappe de carcasse (9, 11) sont de structure identique, à l'exception de l'orientation angulaire différente de leurs supports de rigidité (9a, 11a).

4. Pneumatique de véhicule automobile selon l'une des revendications 1 à 3, **caractérisé en ce que** les cols (10) de la première nappe de carcasse (9) s'étendent jusqu'à une hauteur (h), mesurée dans le sens radial à partir de l'angle de jante (E) de la zone de talon (4), laquelle est égale de 10 % à 20 % de la hauteur de la section transversale du pneu.

5. Pneumatique de véhicule automobile selon l'une des revendications 1 à 3, **caractérisé en ce que** l'extrémité de la nappe de renforcement de la deuxième nappe de carcasse (11), qui se termine radialement à l'intérieur de la première nappe de carcasse (9) et de l'assemblage de ceinture (2), se trouve à un écart (a) de 7 % à 15 % de la largeur de ceinture (B_{G}) du bord extérieur de l'assemblage de ceinture (2).

6. Pneumatique de véhicule automobile selon l'une des revendications 1 à 5, **caractérisé en ce que** l'extrémité de la nappe de renforcement de la deuxième nappe de carcasse (11), qui se termine radialement à l'extérieur de la première nappe de carcasse (9) et radialement à l'intérieur de l'assemblage de ceinture (2), se trouve à un écart (b) du bord extérieur de l'assemblage de ceinture (2) qui est supérieur à l'écart (a) de l'autre extrémité de la nappe de renforcement de la deuxième nappe de carcasse (11) par rapport au bord extérieur de l'assemblage de ceinture (2) et qui est égal à 10 % à 20 % de la largeur de ceinture (B_{G}).
